# EUROPEAN PATENT APPLICATION

(11) **EP 4 629 305 A1**
(43) Date of publication of application: **08.10.2025**
(21) Application number: 25167875.1
(22) Date of filing: 01.04.2025
(51) Int. Cl.: H01M 4/04

(54) **DEVICE AND METHOD FOR MANUFACTURING ELECTRODE**

(30) Priority: 02.04.2024 KR 20240044772
(71) Applicant: SK On Co., Ltd., Seoul 03161 (KR)
(72) Inventor: Kwon, Min Chan, Daejeon 34124 (KR)
(74) Representative: Stolmár & Partner Patentanwälte PartG mbB

(57) **Abstract**

A device and method for manufacturing an electrode are disclosed. An electrode manufacturing device (10) includes an electrode sheet supply roll transferring a pre-electrode sheet which forms a face and another face; a position adjustment roll (500) adjacent to the electrode sheet supply roll and receiving the pre-electrode sheet from the electrode sheet supply roll; a laminating roll (410) and a pressurizing roll (600) which receive the pre-electrode sheet from the position adjustment roll (500) and face each other; an active material supply roll facing the laminating roll (410) and providing an active material (53) to the laminating roll (410); and a heater (700) proving heat to a heating area of the pre-electrode sheet positioned between the electrode sheet supply roll and the position adjustment roll (500). The pre-electrode sheet and the active material (53) are inserted into and discharged from between the laminating roll (410) and the pressurizing roll (600).

## Description

### TECHINICAL FIELD

The present disclosure relates to a device and method for manufacturing an electrode.

### BACKGROUND

An electrode used in a secondary battery may be formed by combining a binder and an active material with a sheet-shaped electrode current collector. The active material may be transformed from a dry powder state and combined with the binder, and a thickness and a combining force of the active material may affect the performance of the secondary battery.

### SUMMARY

An object of embodiments of the present disclosure may be to provide a device and method for manufacturing an electrode combining an active material with a binder applied to an electrode current collector.

Another object of embodiments of the present disclosure may be to provide a device and method for manufacturing an electrode adjusting a temperature of an active material attached to a pre-electrode sheet.

An electrode manufacturing device according to an embodiment of the present disclosure may comprise an electrode sheet supply roll transferring a pre-electrode sheet which forms a face and another face; a position adjustment roll adjacent to the electrode sheet supply roll, the position adjustment roll receiving the pre-electrode sheet from the electrode sheet supply roll; a laminating roll and a pressurizing roll which receive the pre-electrode sheet from the position adjustment roll and face each other; an active material supply roll facing the laminating roll and providing an active material to the laminating roll; and a heater proving heat to a heating area of the pre-electrode sheet, the heating area being positioned between the electrode sheet supply roll and the position adjustment roll, and the pre-electrode sheet and the active material may be inserted into and discharged from between the laminating roll and the pressurizing roll.

An electrode manufacturing equipment according to an embodiment of the present disclosure may comprise an electrode sheet supply roll transferring a pre-electrode sheet which forms a face and another face; a position adjustment roll adjacent to the electrode sheet supply roll, the position adjustment roll receiving the pre-electrode sheet from the electrode sheet supply roll; a laminating roll and a pressurizing roll which receive the pre-electrode sheet from the position adjustment roll and face each other; an active material supply roll facing the laminating roll and providing an active material to the laminating roll; a heater proving heat to a heating area of the pre-electrode sheet, the heating area being positioned between the electrode sheet supply roll and the position adjustment roll; and an electrode thickness measurement device measuring a thickness of a post-electrode sheet formed by combining the pre-electrode sheet and the active material, and the pre-electrode sheet and the active material may be inserted into and discharged from between the laminating roll and the pressurizing roll to form the post-electrode sheet.

An electrode manufacturing method according to an embodiment of the present disclosure may comprise applying a binder to an electrode current collector to form a pre-electrode sheet; combining an active material with the binder; and inspecting a post-electrode sheet formed by combining the electrode current collector, the binder, and the active material, and combining the active material may comprise heating the pre-electrode sheet by a heater; measuring a temperature of the pre-electrode sheet; determining whether the temperature of the pre-electrode sheet is good; and rotating a laminating roll in contact with the active material to combine the active material with the binder.

According to embodiments of the present disclosure, a device and method for manufacturing an electrode combining an active material with a binder applied to an electrode current collector can be provided.

According to embodiments of the present disclosure, a device and method for manufacturing an electrode adjusting a temperature of an active material attached to a pre-electrode sheet can be provided.

A device and method for manufacturing an electrode according to some embodiments of the present disclosure can be widely applied in green technology fields such as electric vehicles, battery charging stations, and other battery-based solar power generation and wind power generation.

A device and method for manufacturing an electrode according to some embodiments of the present disclosure can be used in eco-friendly electric vehicles, hybrid vehicles, etc. to prevent climate change by suppressing air pollution and greenhouse gas emissions.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates an electrode manufacturing equipment according to an embodiment of the present disclosure.
FIG. 2 illustrates an electrode manufacturing device illustrated in FIG. 1.
FIG. 3 illustrates a cross section of a part of a sensor assembly and a laminating roll illustrated in FIG. 2 taken along A1-A2.
FIG. 4 illustrates a laminating roll unit according to an embodiment of the present disclosure.
FIG. 5 illustrates an electrode manufacturing equipment coating or laminating an active material on two faces of an electrode sheet.
FIG. 6 is a block diagram of an electrode manufacturing device according to an embodiment of the present disclosure.
FIG. 7 is a block diagram of an electrode manufacturing equipment according to an embodiment of the present disclosure.
FIG. 8 is a flowchart illustrating an electrode manufacturing method according to an embodiment of the present disclosure.
FIG. 9 is a flowchart illustrating an active material combining step illustrated in FIG. 8.
FIG. 10 is a flowchart illustrating an electrode sheet inspection step illustrated in FIG. 8.
FIG. 11 is a flowchart illustrating an active material combining step including a step of heating a pre-electrode sheet.

### DETAILED DESCRIPTION OF THE EMBODIMENTS

Reference will now be made in detail to embodiments of the present disclosure, examples of which are illustrated in the accompanying drawings. However, the following description is merely an example and does not intend to limit the present disclosure to a specific implementation.

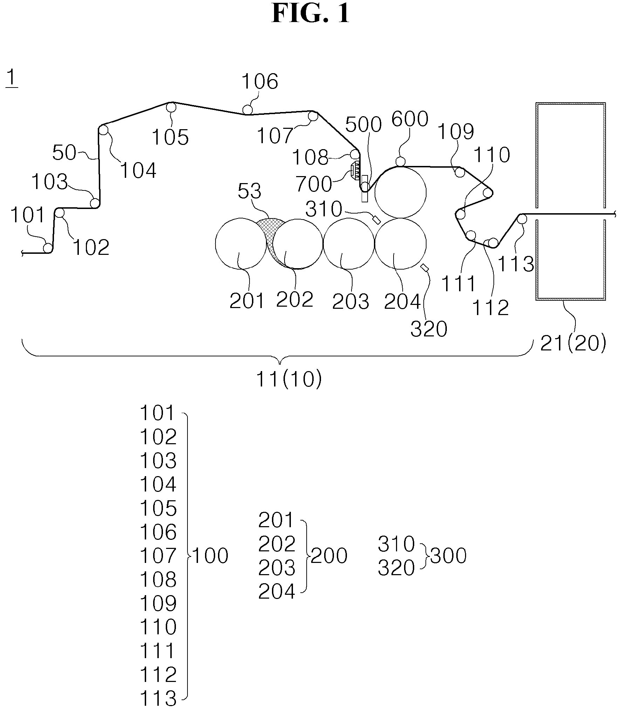

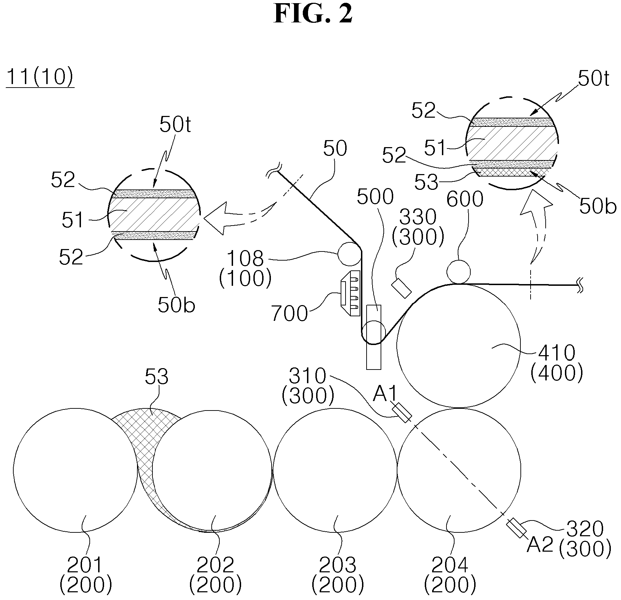

FIG. 1 illustrates an electrode manufacturing equipment according to an embodiment of the present disclosure. FIG. 2 illustrates an electrode manufacturing device illustrated in FIG. 1.

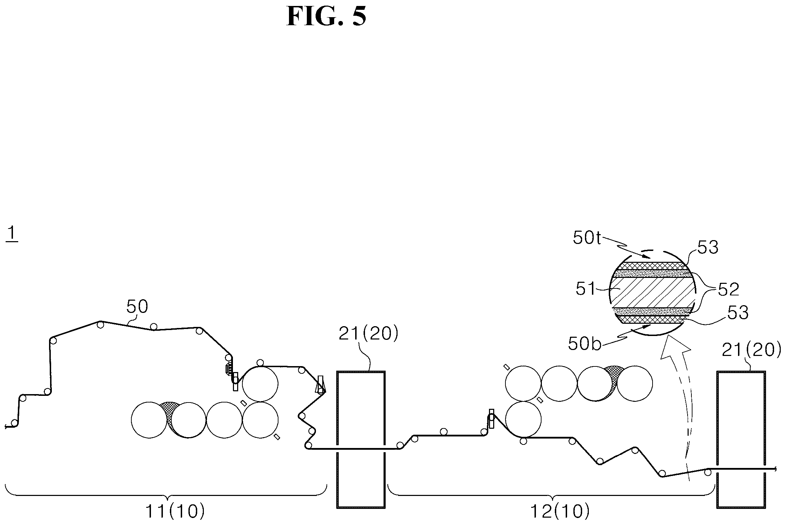

Referring to FIGS. 1 and 2, an electrode manufacturing equipment 1 may include an electrode manufacturing device 10. For example, the electrode manufacturing equipment 1 may include a first electrode manufacturing device 11. The electrode manufacturing device 10 may include or indicate at least one of the first electrode manufacturing device 11 or a second electrode manufacturing device 12 (see FIG. 5).

The electrode manufacturing device 10 may transfer an electrode sheet 50. For example, the electrode manufacturing device 10 may include an electrode transfer roll assembly 100. The electrode transfer roll assembly 100 may transfer the electrode sheet 50.

The electrode transfer roll assembly 100 may include a plurality of electrode transfer rolls 101, ..., 113. For example, the electrode transfer roll assembly 100 may include a first electrode transfer roll 101, a second electrode transfer roll 102, a third electrode transfer roll 103, a fourth electrode transfer roll 104, a fifth electrode transfer roll 105, a sixth electrode transfer roll 106, a seventh electrode transfer roll 107, an eighth electrode transfer roll 108, a ninth electrode transfer roll 109, a tenth electrode transfer roll 110, an eleventh electrode transfer roll 111, a twelfth electrode transfer roll 112, and a thirteenth electrode transfer roll 113.

The electrode sheet 50 may form a shape extending in a longitudinal direction. For example, the longitudinal direction of the electrode sheet 50 may be a direction in which the electrode sheet 50 is transferred by the electrode transfer roll assembly 100.

The electrode sheet 50 may have a sheet shape. For example, the electrode sheet 50 may form two faces. For example, an electrode sheet upper face 50t may form an upper face of the electrode sheet 50. For example, an electrode sheet lower face 50b may form a lower face of the electrode sheet 50.

The electrode sheet 50 may include an electrode current collector 51. The electrode current collector 51 may be formed of a metal. For example, the electrode current collector 51 may be formed of at least one of copper (Cu) or aluminum (Al). The electrode current collector 51 may have a sheet shape.

The electrode sheet 50 may include a binder 52. The binder 52 may be applied to one face or two faces of the electrode current collector 51. For example, the binder 52 may be coated or laminated on the electrode current collector 51.

For example, the binder 52 may form at least one of the electrode sheet upper face 50t or the electrode sheet lower face 50b. The electrode current collector 51 and the binder 52 may form a layer. In other words, the binder 52 may be laminated on the electrode current collector 51.

The electrode sheet 50 may include an active material 53. The active material 53 may include at least one of lithium (Li), cobalt (Co), oxygen (O), manganese (Mn), nickel (Ni), aluminum (Al), phosphorus (P), or iron (Fe).

The active material 53 may be combined with the binder 52. For example, the active material 53 may be coated or laminated on the binder 52. When the active material 53 is combined with the binder 52, the active material 53 may form at least one of the electrode sheet upper face 50t or the electrode sheet lower face 50b.

For example, the electrode current collector 51, the binder 52, and the active material 53 may form a layer.

The electrode manufacturing device 10 may include an active material transfer roll assembly 200. The active material transfer roll assembly 200 may include a plurality of active material transfer rolls 201, 202, 203 and 204.

For example, the active material transfer roll assembly 200 may include a first active material transfer roll 201, a second active material transfer roll 202, a third active material transfer roll 203, and a fourth active material transfer roll 204.

The active material transfer rolls 201, 202, 203 and 204 may include or indicate at least one of the first active material transfer roll 201, the second active material transfer roll 202, the third active material transfer roll 203, or the fourth active material transfer roll 204.

The active material 53 may be inserted into the active material transfer rolls 201, 202, 203 and 204. For example, the active material 53 inserted into the active material transfer rolls 201, 202, 203 and 204 may be in a dried powder state. For example, the active material 53 in the powder state may be inserted into between the first active material transfer roll 201 and the second active material transfer roll 202.

The first active material transfer roll 201 and the second active material transfer roll 202 may change at least one of the state or form of the active material. For example, the first active material transfer roll 201 and the second active material transfer roll 202 may provide pressure to the active material 53 of the powder state.

For example, the first active material transfer roll 201 and the second active material transfer roll 202 may convert the active material 53 of the powder state into the active material 53 of a film state.

The first active material transfer roll 201 and the second active material transfer roll 202 may face each other. A rotation axis of the first active material transfer roll 201 and a rotation axis of the second active material transfer roll 202 may be parallel to each other.

The first active material transfer roll 201 and the second active material transfer roll 202 may rotate in opposite directions. A circumferential speed of an outer circumferential surface of the first active material transfer roll 201 may be different from a circumferential speed of an outer circumferential surface of the second active material transfer roll 202.

For example, the circumferential speed of the outer circumferential surface of the second active material transfer roll 202 may be greater than the circumferential speed of the outer circumferential surface of the first active material transfer roll 201. When a radius of the first active material transfer roll 201 and a radius of the second active material transfer roll 202 are the same, an angular speed of the second active material transfer roll 202 may be greater than an angular speed of the first active material transfer roll 201.

For example, if the circumferential speed of the outer circumferential surface of the second active material transfer roll 202 is greater than the circumferential speed of the outer circumferential surface of the first active material transfer roll 201, a shear force may act on the active material 53. As a result, the active material 53 in the film state may rotate while in contact with the second active material transfer roll 202.

The second active material transfer roll 202 and the third active material transfer roll 203 may face each other. The rotation axis of the second active material transfer roll 202 and a rotation axis of the third active material transfer roll 203 may be parallel to each other.

The first active material transfer roll 201, the second active material transfer roll 202, and the third active material transfer roll 203 may be arranged sequentially. For example, the second active material transfer roll 202 may be arranged between the first active material transfer roll 201 and the third active material transfer roll 203.

The second active material transfer roll 202 and the third active material transfer roll 203 may rotate in opposite directions. The circumferential speed of the outer circumferential surface of the second active material transfer roll 202 may be different from a circumferential speed of an outer circumferential surface of the third active material transfer roll 203.

For example, the circumferential speed of the outer circumferential surface of the third active material transfer roll 203 may be greater than the circumferential speed of the outer circumferential surface of the second active material transfer roll 202. When a radius of the second active material transfer roll 202 and a radius of the third active material transfer roll 203 are the same, an angular speed of the third active material transfer roll 203 may be greater than the angular speed of the second active material transfer roll 202.

For example, if the circumferential speed of the outer circumferential surface of the third active material transfer roll 203 is greater than the circumferential speed of the outer circumferential surface of the second active material transfer roll 202, a shear force may act on the active material 53 between the second active material transfer roll 202 and the third active material transfer roll 203. As a result, the active material 53 in the film state may be separated from the second active material transfer roll 202 and rotate while in contact with the third active material transfer roll 203.

The second active material transfer roll 202 and the third active material transfer roll 203 may apply pressure to the active material 53 of the film state. For example, a thickness of the active material 53 that rotates while in contact with the third active material transfer roll 203 may be less than a thickness of the active material 53 that rotates while in contact with the second active material transfer roll 202.

The third active material transfer roll 203 and the fourth active material transfer roll 204 may face each other. A rotation axis of the third active material transfer roll 203 and a rotation axis of the fourth active material transfer roll 204 may be parallel to each other.

The second active material transfer roll 202, the third active material transfer roll 203, and the fourth active material transfer roll 204 may be arranged sequentially. For example, the third active material transfer roll 203 may be arranged between the second active material transfer roll 202 and the fourth active material transfer roll 204.

The third active material transfer roll 203 and the fourth active material transfer roll 204 may rotate in opposite directions. A circumferential speed of an outer circumferential surface of the fourth active material transfer roll 204 may be different from the circumferential speed of the outer circumferential surface of the third active material transfer roll 203.

For example, the circumferential speed of the outer circumferential surface of the fourth active material transfer roll 204 may be greater than the circumferential speed of the outer circumferential surface of the third active material transfer roll 203. When the radius of the third active material transfer roll 203 and a radius of the fourth active material transfer roll 204 are the same, an angular speed of the fourth active material transfer roll 204 may be greater than the angular speed of the third active material transfer roll 203.

For example, if the circumferential speed of the outer circumferential surface of the fourth active material transfer roll 204 is greater than the circumferential speed of the outer circumferential surface of the third active material transfer roll 203, a shear force may act on the active material 53 between the third active material transfer roll 203 and the fourth active material transfer roll 204. As a result, the active material 53 in the film state may be separated from the third active material transfer roll 203 and rotate while in contact with the fourth active material transfer roll 204.

The third active material transfer roll 203 and the fourth active material transfer roll 204 may apply pressure to the active material 53 of the film state. For example, a thickness of the active material 53 that rotates while in contact with the fourth active material transfer roll 204 may be less than a thickness of the active material 53 that rotates while in contact with the third active material transfer roll 203.

The electrode manufacturing device 10 may include a sensor assembly 300. The sensor assembly 300 may include a roll sensor unit 310 and an active material sensor unit 320.

The sensor assembly 300 may face the active material transfer roll assembly 200. For example, the sensor assembly 300 may measure a distance between the active material transfer roll assembly 200 and the sensor assembly 300.

For example, the roll sensor unit 310 may measure a distance between the fourth active material transfer roll 204 and the roll sensor unit 310. For example, the roll sensor unit 310 may measure a distance between the outer circumferential surface of the fourth active material transfer roll 204 and the roll sensor unit 310.

The roll sensor unit 310 and the active material sensor unit 320 may measure a thickness of the active material 53 in contact with the fourth active material transfer roll 204. For example, the active material sensor unit 320 may measure a distance between the active material sensor unit 320 and the outer circumferential surface of the fourth active material transfer roll 204.

Thereafter, the active material sensor unit 320 may measure a distance between the active material 53 in contact with the outer circumferential surface of the fourth active material transfer roll 204 and the active material sensor unit 320.

The distance between the active material sensor unit 320 and the outer circumferential surface of the fourth active material transfer roll 204 may be referred to as a "roll distance." The distance between the active material 53 in contact with the outer circumferential surface of the fourth active material transfer roll 204 and the active material sensor unit 320 may be referred to as an "active material distance." A thickness of the active material 53 in contact with the outer circumferential surface of the fourth active material transfer roll 204 may be a difference between the active material distance and the roll distance.

A position of the roll sensor unit 310 may be set so that the distance between the roll sensor unit 310 and the fourth active material transfer roll 204 is the roll distance. If the distance measured by the roll sensor unit 310 is different from the roll distance, it may be determined that the position of the fourth active material transfer roll 204 is changed.

The electrode manufacturing device 10 may include a laminating roll unit 400. The laminating roll unit 400 may include a laminating roll 410.

The laminating roll 410 and the fourth active material transfer roll 204 may face each other. A rotation axis of the laminating roll 410 and the rotation axis of the fourth active material transfer roll 204 may be parallel to each other.

The laminating roll 410 and the fourth active material transfer roll 204 may rotate in opposite directions. A circumferential speed of an outer circumferential surface of the laminating roll 410 may be different from the circumferential speed of the outer circumferential surface of the fourth active material transfer roll 204.

For example, the circumferential speed of the outer circumferential surface of the laminating roll 410 may be greater than the circumferential speed of the outer circumferential surface of the fourth active material transfer roll 204. When a radius of the laminating roll 410 and the radius of the fourth active material transfer roll 204 are the same, an angular speed of the laminating roll 410 may be greater than the angular speed of the fourth active material transfer roll 204.

For example, if the circumferential speed of the outer circumferential surface of the laminating roll 410 is greater than the circumferential speed of the outer circumferential surface of the fourth active material transfer roll 204, a shear force may act on the active material 53 between the fourth active material transfer roll 204 and the laminating roll 410. As a result, the active material 53 in the film state may be separated from the fourth active material transfer roll 204 and rotate while in contact with the laminating roll 410.

In other words, the fourth active material transfer roll 204 may provide the active material 53 of the film state to the laminating roll 410. In this context, the fourth active material transfer roll 204 may be referred to as an "active material supply roll."

The laminating roll 410 and the fourth active material transfer roll 204 may apply pressure to the active material 53 of the film state. For example, a thickness of the active material 53 that rotates while in contact with the laminating roll 410 may be less than the thickness of the active material 53 that rotates while in contact with the fourth active material transfer roll 204.

The laminating roll 410 may provide heat to the active material 53. For example, the outer circumferential surface of the laminating roll 410 may transfer heat to the active material 53. For example, the laminating roll 410 may include a heating member (not shown). For example, the heating member (not shown) included in the laminating roll 410 may provide heat to the outer circumferential surface of the laminating roll 410.

The electrode manufacturing device 10 may include a pressurizing roll 600. The pressurizing roll 600 may face the laminating roll 410. A rotation axis of the pressurizing roll 600 and the rotation axis of the laminating roll 410 may be parallel to each other.

The fourth active material transfer roll 204, the laminating roll 410, and the pressurizing roll 600 may be arranged sequentially. For example, the laminating roll 410 may be arranged between the fourth active material transfer roll 204 and the pressurizing roll 600.

The pressurizing roll 600 and the laminating roll 410 may rotate in opposite directions. A circumferential speed of an outer circumferential surface of the pressurizing roll 600 may be the same as the circumferential speed of the outer circumferential surface of the laminating roll 410.

The electrode sheet 50 and the active material 53 may be inserted into between the pressurizing roll 600 and the laminating roll 410. The pressurizing roll 600 and the laminating roll 410 may apply pressure to the electrode sheet 50 and the active material 53.

The electrode sheet 50 inserted into between the pressurizing roll 600 and the laminating roll 410 may be referred to as a "pre-electrode sheet." The electrode sheet 50 discharged from between the pressurizing roll 600 and the laminating roll 410 may be referred to as a "post-electrode sheet."

The active material 53 inserted into between the pressurizing roll 600 and the laminating roll 410 may be combined with the pre-electrode sheet 50 inserted into between the pressurizing roll 600 and the laminating roll 410.

For example, the active material 53 of the film state inserted into between the pressurizing roll 600 and the laminating roll 410 may be combined with to the binder 52 of the pre-electrode sheet 50 inserted into between the pressurizing roll 600 and the laminating roll 410.

The outer circumferential surface of the pressurizing roll 600 may be formed of a material with elasticity. For example, the outer circumferential surface of the pressurizing roll 600 may be formed of a material including silicon. For example, the outer circumferential surface of the pressurizing roll 600 may be formed of a material including a polymer.

The electrode manufacturing device 10 may include a position adjustment roll 500. The position adjustment roll 500 may transfer the electrode sheet 50. The position adjustment roll 500 may transfer the electrode sheet 50 transferred from the eighth electrode transfer roll 108 to the pressurizing roll 600.

While the electrode sheet 50 is transferred from the eighth electrode transfer roll 108 to the position adjustment roll 500 and is transferred from the position adjustment roll 500 to the laminating roll 410, the electrode sheet 50 may be in contact with the active material 53 that is in contact with the laminating roll 410. In this context, the eighth electrode transfer roll 108 may be referred to as an "electrode sheet supply roll."

The active material 53 positioned on the laminating roll 410 and the binder 52 of the electrode sheet 50 may pass between the laminating roll 410 and the pressurizing roll 600 and be combined with each other.

For example, the pre-electrode sheet 50 and the active material 53 may be inserted into between the laminating roll 410 and the pressurizing roll 600. The pre-electrode sheet 50 and the active material 53 may be combined with each other.

For example, before the active material 53 positioned on the laminating roll 410 and the binder 52 of the pre-electrode sheet 50 are combined with each other, the binder 52 may form a pre-electrode sheet lower face 50b.

For example, when the active material 53 positioned on the laminating roll 410 and the binder 52 of the pre-electrode sheet 50 are combined with each other, the active material 53 may form an electrode sheet lower face 50b of the post-electrode sheet 50.

Depending on the position of the position adjustment roll 500, a length of the pre-electrode sheet 50 in contact with the laminating roll 410 may vary. The position of the position adjustment roll 500 may be adjusted. For example, the position of the position adjustment roll 500 may be adjusted so that the length of the pre-electrode sheet 50 in contact with the laminating roll 410 is optimized.

The sensor assembly 300 may include a temperature sensor unit 330. The temperature sensor unit 330 may measure a temperature of the pre-electrode sheet 50 in contact with the laminating roll 410.

The electrode manufacturing device 10 may include a heater 700. The heater 700 may be positioned between the electrode transfer roll assembly 100 and the position adjustment roll 500. For example, the heater 700 may be positioned between the eighth electrode transfer roll 108 and the position adjustment roll 500.

The heater 700 may provide heat to the pre-electrode sheet 50 transferred to the position adjustment roll 500. For example, the heater 700 may provide infrared light or near-infrared light to the pre-electrode sheet 50. For example, the heater 700 may include at least one of a light emitting diode (LED), a laser, or a heating lamp.

For example, the heater 700 may increase the temperature of the pre-electrode sheet 50. For example, when heat is provided to the pre-electrode sheet 50, the temperature of the binder 52 of the pre-electrode sheet 50 may be a temperature suitable for combining the binder 52 and the active material 53.

For example, the heater 700 may face a face of the pre-electrode sheet 50. For example, the heater 700 may face the binder 52 of the pre-electrode sheet 50. For example, the heater 700 may provide heat to the binder 52 of the pre-electrode sheet 50.

An area of the pre-electrode sheet 50 positioned between the position adjustment roll 500 and the eighth electrode transfer roll 108 may be referred to as a "heating area." The heater 700 may face the heating area. For example, the heater 700 may provide heat to the heating area.

The temperature sensor unit 330 may measure at least one of a temperature of the pre-electrode sheet 50 in contact with the laminating roll 410 or a temperature of the heating area.

If the heater 700 includes the heating lamp, a distance between the heater 700 and the heating area may be adjusted to control the temperature of the pre-electrode sheet 50. If the heater 700 includes the laser, an output of the heater 700 may be adjusted to control the temperature of the pre-electrode sheet 50.

The electrode manufacturing equipment 1 may include an electrode thickness measurement device 20. For example, the electrode manufacturing equipment 1 may include a first electrode thickness measurement device 21. The electrode thickness measurement device 20 may include or indicate at least one of the first electrode thickness measurement device 21 or a second electrode thickness measurement device 22 (see FIG. 5).

The electrode thickness measurement device 20 may measure at least one of a thickness or a thickness profile of the post-electrode sheet 50. For example, the first electrode thickness measurement device 21 may measure at least one of the thickness or the thickness profile of the pre-electrode sheet 50 in which the active material 53 is formed on a face of the pre-electrode sheet 50.

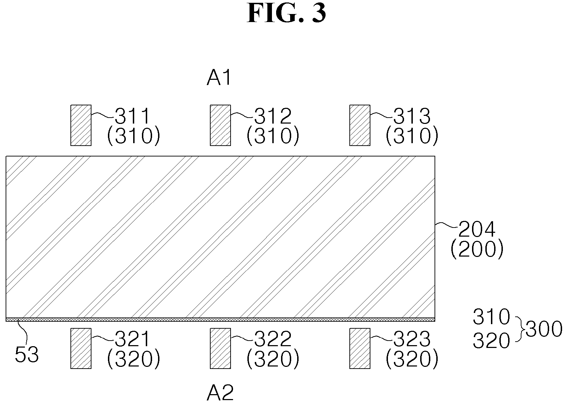

FIG. 3 illustrates a cross section of a part of a sensor assembly and a laminating roll illustrated in FIG. 2 taken along A1-A2.

Referring to FIGS. 2 and 3, the laminating roll 410 may have a cylinder shape. The laminating roll 410 may form a shape extending in a longitudinal direction of the laminating roll 410. The longitudinal direction of the laminating roll 410 may be parallel to a rotation axis direction of the laminating roll 410.

For example, the roll sensor unit 310 may face the laminating roll 410. The roll sensor unit 310 may measure a distance between the laminating roll 410 and the roll sensor unit 310.

For example, the active material sensor unit 320 may face the active material 53 in contact with the laminating roll 410. The active material sensor unit 320 may measure a distance between the active material sensor unit 320 and the active material 53.

The roll sensor unit 310 may include a plurality of roll sensors 311, 312 and 313. The plurality of roll sensors 311, 312 and 313 may be arranged in the longitudinal direction of the laminating roll 410.

For example, the roll sensor unit 310 may include a first roll sensor 311, a second roll sensor 312, and a third roll sensor 313. The roll sensors 311, 312 and 313 may include or indicate at least one of the first roll sensor 311, the second roll sensor 312, or the third roll sensor 313.

The active material sensor unit 320 may include a plurality of active material sensors 321, 322 and 323. For example, the plurality of active material sensors 321, 322 and 323 may be arranged in the length direction of the laminating roll 410.

For example, the active material sensor unit 320 may include a first active material sensor 321, a second active material sensor 321, and a third active material sensor 323. The active material sensors 321, 322 and 323 may include or indicate at least one of the first active material sensor 321, the second active material sensor 321, or the third active material sensor 323.

The roll sensor unit 310 and the active material sensor unit 320 may be arranged with the laminating roll 410 interposed between the roll sensor unit 310 and the active material sensor unit 320.

For example, the first roll sensor 311 and the first active material sensor 321 may be arranged with the laminating roll 410 interposed therebetween. For example, the first roll sensor 311 and the first active material sensor 321 may be directed toward a first point of the rotation axis of the laminating roll 410.

For example, the second roll sensor 312 and the second active material sensor 322 may be arranged with the laminating roll 410 interposed therebetween. For example, the second roll sensor 312 and the second active material sensor 322 may be directed toward a second point of the rotation axis of the laminating roll 410.

For example, the third roll sensor 313 and the third active material sensor 323 may be arranged with the laminating roll 410 interposed therebetween. For example, the third roll sensor 313 and the third active material sensor 323 may be directed toward a third point of the rotation axis of the laminating roll 410.

The sensor assembly 300 may measure the thickness of the active material 53 in contact with the laminating roll 410. For example, the sensor assembly 300 may measure a profile of the thickness of the active material 53 in contact with the laminating roll 410. For example, the sensor assembly 300 may measure a thickness profile (depth profile) of the active material 53 of the film state in contact with the laminating roll 410 based on the rotation axis of the laminating roll 410.

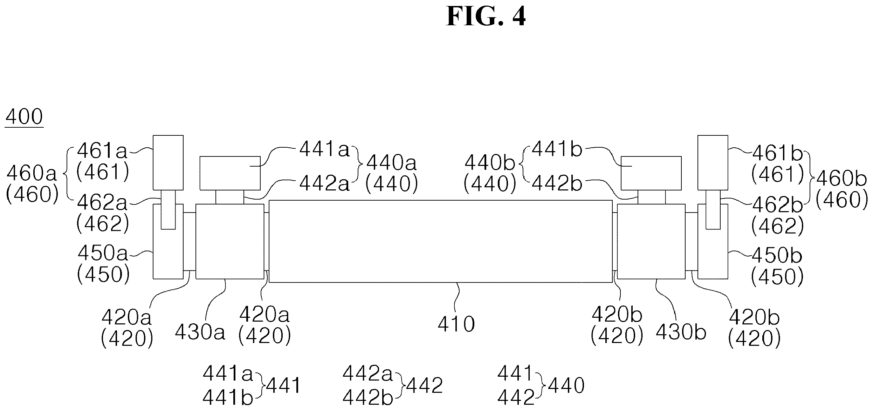

FIG. 4 illustrates a laminating roll unit according to an embodiment of the present disclosure.

Referring to FIGS. 3 and 4, the laminating roll unit 400 may include the laminating roll 410. The laminating roll 410 may have a shape extending along the rotation axis of the laminating roll 410. The longitudinal direction of the laminating roll 410 may be the same as a longitudinal direction of the rotation axis of the laminating roll 410.

The laminating roll unit 400 may include a coupling shaft 420. A plurality of coupling shafts 420 may be provided. For example, the laminating unit 400 may include a first coupling shaft 420a and a second coupling shaft 420b. The coupling shaft 420 may include or indicate at least one of the first coupling shaft 420a or the second coupling shaft 420b.

The coupling shaft 420 may be connected or coupled to the laminating roll 410. For example, a rotation axis of the coupling shaft 420 may be connected or coupled to the rotation axis of the laminating roll 410.

For example, the first coupling shaft 420a may be connected or coupled to an end of the laminating roll 410. For example, a rotation axis of the first coupling shaft 420a may be connected or coupled to an end of the rotation axis of the laminating roll 410.

For example, the second coupling shaft 420b may be connected or coupled to another end of the laminating roll 410. For example, a rotation axis of the second coupling shaft 420b may be connected or coupled to another end of the rotation axis of the laminating roll 410.

The laminating roll unit 400 may include an inner housing 430. The inner housing 430 may accommodate the coupling shaft 420. The coupling shaft 420 may be rotatably coupled to the inner housing 430.

A plurality of inner housings 430 may be provided. For example, the laminating roll unit 400 may include a first inner housing 430a and a second inner housing 430b. The inner housing 430 may include or indicate at least one of the first inner housing 430a or the second inner housing 430b.

For example, the first inner housing 430a may accommodate the first coupling shaft 420a. For example, the first coupling shaft 420a may be rotatably coupled to the first inner housing 430a.

For example, the second inner housing 430b may accommodate the second coupling shaft 420b. For example, the second coupling shaft 420b may be rotatably coupled to the second inner housing 430b.

The laminating roll unit 400 may include an inner housing mover 440. The inner housing mover 440 may be connected or coupled to the inner housing 430.

A plurality of inner housing movers 440 may be provided. For example, the laminating roll unit 400 may include a first inner housing mover 440a and a second inner housing mover 440b. The inner housing mover 440 may include or indicate at least one of the first inner housing mover 440a or the second inner housing mover 440b.

For example, the first inner housing mover 440a may be connected or coupled to the first inner housing 430a. For example, the second inner housing mover 440b may be connected or coupled to the second inner housing 430b.

The inner housing mover 440 may include an inner housing mover body 441 and an inner housing mover rod 442. The inner housing mover rod 442 may be movably coupled to the inner housing mover body 441.

An end of the inner housing mover rod 442 may be connected or coupled to the inner housing mover body 441, and another end of the inner housing mover rod 442 may be connected or coupled to the inner housing 430.

The inner housing mover body 441 may provide a driving force to the inner housing mover rod 442. When the inner housing mover rod 442 receives the driving force from the inner housing mover body 441, the inner housing 430 may move in a radial direction of the coupling shaft 420.

When the inner housing 430 moves in the radial direction of the coupling shaft 420, the coupling shaft 420 may move in a radial direction of the coupling shaft 420.

The coupling shaft 420 may rotate in the same manner as the laminating roll 410. For example, the coupling shaft 420 and the laminating roll 410 may transmit a rotational force to each other. For example, the coupling shaft 420 may transmit the rotational force to the laminating roll 410. For example, the laminating roll 410 may transmit the rotational force to the coupling shaft 420.

For example, the rotation axis of the coupling shaft 420 and the rotation axis of the laminating roll 410 may form a coaxial axis. For another example, the rotation axis of the coupling shaft 420 and the rotation axis of the laminating roll 410 may form an angle. In other words, the coupling shaft 420 may be coupled to the laminating roll 410 so as to be able to form an angle with the laminating roll 410.

For example, a gear included in the coupling shaft 420 may be coupled to a gear formed on the laminating roll 410. Hence, even if the rotation axis of the coupling shaft 420 and the rotation axis of the laminating roll 410 form an angle, the rotational force may be transmitted between the coupling shaft 420 and the laminating roll 410.

When the coupling shaft 420 moves in the radial direction of the coupling shaft 420, the rotation axis of the laminating roll 410 may move or tilt. When the rotation axis of the laminating roll 410 moves or tilts, a shape of a gap between the laminating roll 410 and the fourth active material transfer roll 204 may change.

The first inner housing mover 440a may include a first inner housing mover body 441a and a first inner housing mover rod 442a. The second inner housing mover 440b may include a second inner housing mover body 441b and a second inner housing mover rod 442b.

The inner housing mover body 441 may include or indicate at least one of the first inner housing mover body 441a or the second inner housing mover body 441b.

The inner housing mover rod 442 may include or indicate at least one of the first inner housing mover rod 442a or the second inner housing mover rod 442b.

The laminating roll unit 400 may include an outer housing 450. The outer housing 450 may be adjacent to the inner housing 430. The outer housing 450 may accommodate the coupling shaft 420. The coupling shaft 420 may be rotatably coupled to the outer housing 450.

A plurality of outer housings 450 may be provided. For example, the laminating roll unit 400 may include a first outer housing 450a and a second outer housing 450b. The outer housing 450 may include or indicate at least one of the first outer housing 450a or the second outer housing 450b.

The first inner housing 430a may be positioned between the first outer housing 450a and the laminating roll 410. The second inner housing 430b may be positioned between the second outer housing 450b and the laminating roll 410.

The first outer housing 450a may accommodate the first coupling shaft 420a. For example, the first coupling shaft 420a may be rotatably coupled to the first inner housing 430a and the first outer housing 450a.

The second outer housing 450b may accommodate the second coupling shaft 420b. For example, the second coupling shaft 420b may be rotatably coupled to the second inner housing 430b and the second outer housing 450b.

The laminating roll unit 400 may include an outer housing mover 460. The outer housing mover 460 may be connected or coupled to the outer housing 450.

A plurality of outer housing movers 460 may be provided. For example, the laminating roll unit 400 may include a first outer housing mover 460a and a second outer housing mover 460b. The outer housing mover 460 may include or indicate at least one of the first outer housing mover 460a or the second outer housing mover 460b.

For example, the first outer housing mover 460a may be connected or coupled to the first outer housing 450a. For example, the second outer housing mover 460b may be connected or coupled to the second outer housing 450b.

The outer housing mover 460 may include an outer housing mover body 461 and an outer housing mover rod 462. The outer housing mover rod 462 may be movably coupled to the outer housing mover body 461.

An end of the outer housing mover rod 462 may be connected or coupled to the outer housing mover body 461, and another end of the outer housing mover rod 462 may be connected or coupled to the outer housing 450.

The outer housing mover body 461 may provide a driving force to the outer housing mover rod 462. When the outer housing mover rod 462 receives the driving force from the outer housing mover body 461, the outer housing 450 may move in the radial direction of the coupling shaft 420.

The outer housing mover body 461 may include or indicate at least one of a first outer housing mover body 461a or a second outer housing mover body 461b.

The outer housing mover rod 462 may include or indicate at least one of a first outer housing mover rod 462a or a second outer housing mover rod 462b.

The laminating roll unit 400 may include a rotation driver (not shown). The rotation driver (not shown) may rotate the laminating roll 410. For example, the laminating roll 410 may receive a driving force from the rotation driver (not shown) and rotate around the rotation axis of the laminating roll 410.

For example, the rotation driver (not shown) may provide a rotational force to the coupling shaft 420. When the coupling shaft 420 receives the rotational force from the rotation driver (not shown), the coupling shaft 420 may rotate around the rotation axis of the coupling shaft 420. When the coupling shaft 420 rotates, the laminating roll 410 may rotate.

FIG. 5 illustrates an electrode manufacturing equipment coating or laminating an active material on two faces of an electrode sheet.

Referring to FIGS. 1 to 5, the electrode manufacturing equipment 1 may include the first electrode manufacturing device 11 and the second electrode manufacturing device 12.

The first electrode manufacturing device 11 may allow the active material 53 to be formed on a face of the electrode sheet 50. For example, the active material 53 may form the electrode sheet lower face 50b by the first electrode manufacturing device 11.

The second electrode manufacturing device 12 may allow the active material 53 to be formed on another face of the electrode sheet 50. For example, the active material 53 may form the electrode sheet upper face 50t by the second electrode manufacturing device 12.

The electrode manufacturing equipment 1 may include the first electrode thickness measurement device 21 and the second electrode thickness measurement device 22.

For example, the first electrode thickness measurement device 21 may measure at least one of a thickness or a thickness profile of the pre-electrode sheet 50 in which the active material 53 is formed on a face of the pre-electrode sheet 50.

For example, the second electrode thickness measurement device 22 (see FIG. 5) may measure at least one of a thickness or a thickness profile of the pre-electrode sheet 50 in which the active material 53 is formed on two faces of the pre-electrode sheet 50.

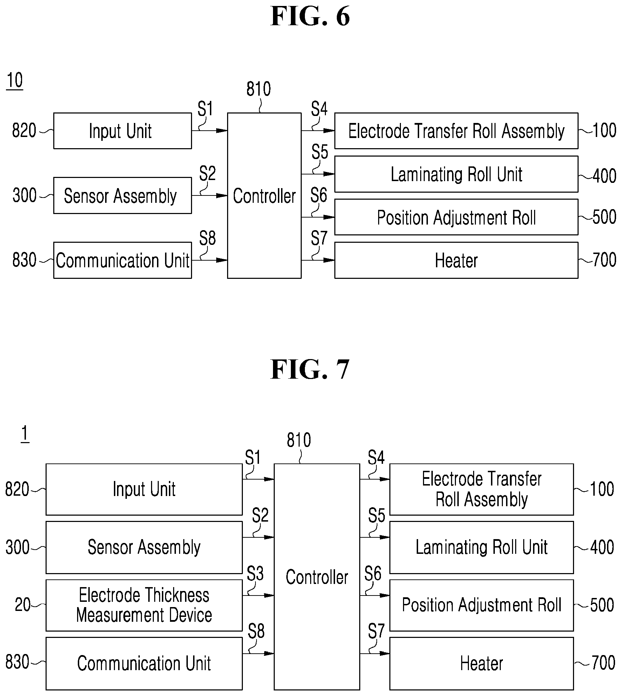

FIG. 6 is a block diagram of an electrode manufacturing device according to an embodiment of the present disclosure.

Referring to FIGS. 1 to 6, the electrode manufacturing device 10 may include a controller 810 that processes signals. The controller 810 may perform operations. For example, the controller 810 may process or calculate data based on a given algorithm.

The controller 810 may be implemented by at least one of a computer, a processor, a circuit board, a laptop, a server, or a printed circuit board (PCB).

The electrode manufacturing device 10 may include an input unit 820. The input unit 820 may obtain an input from a user, etc. The input unit 820 may generate a first signal S1 and transmit the first signal S1 to the controller 810. The first signal S1 may include information on the input obtained by the input unit 820.

The sensor assembly 300 may generate a second signal S2 and transmit the second signal S2 to the controller 810. The second signal S2 may include information on a temperature of the electrode sheet 50.

For example, the second signal S2 may include information on a temperature of a portion of the pre-electrode sheet 50 that is in contact with the fourth active material transfer roll 204. For example, the second signal S2 may include information on a temperature of the heating area of the pre-electrode sheet 50.

The second signal S2 may include information on the thickness and the thickness profile of the active material 53 in contact with the fourth active material transfer roll 204.

For example, the second signal S2 may include information on the thickness profile of the active material 53 in contact with the fourth active material transfer roll 204. The controller 810 may extract a thickness uniformity of the active material 53 in contact with the fourth active material transfer roll 204 from the information on the thickness profile of the active material 53 in contact with the fourth active material transfer roll 204.

For example, the second signal S2 may include information on an overall thickness of the active material 53 in contact with the fourth active material transfer roll 204. For example, the controller 810 may determine, based on the second signal S2, whether a value obtained by subtracting a reference thickness from the overall thickness of the active material 53 in contact with the fourth active material transfer roll 204 is within an error range.

The controller 810 may generate output signals S4, S5, S6 and S7 based on input signals S1 and S2. For example, the controller 810 may input the input signals S1 and S2 into a specific program or algorithm to obtain the output signals S4, S5, S6 and S7.

The input signals S1 and S2 may include or indicate at least one of the first signal S1 or the second signal S2. The output signals S4, S5, S6 and S7 may include or indicate at least one of the fourth signal S4, the fifth signal S5, the sixth signal S6, or the seventh signal S7.

The controller 810 may transmit the fourth signal S4 to the electrode transfer roll assembly 100. The fourth signal S4 may include command information about the transfer of the electrode sheet 50.

The electrode transfer roll assembly 100 may operate in response to the fourth signal S4. For example, the electrode transfer roll assembly 100 may vary a transfer speed of the electrode sheet 50 in response to the fourth signal S4.

The controller 810 may transmit the fifth signal S5 to the laminating roll unit 400. The fifth signal S5 may include information on the operation of the laminating roll unit 400. For example, the fifth signal S5 may include at least one of information on the rotation of the laminating roll 410, information on the operation of the inner housing mover 440, or information on the operation of the outer housing mover 460.

The laminating roll unit 400 may operate in response to the fifth signal S5. For example, the laminating roll 410 may rotate in response to the fifth signal S5. For example, a rotational speed of the laminating roll 410 may vary in response to the fifth signal S5.

For example, the inner housing mover 440 may operate in response to the fifth signal S5. For example, the inner housing mover 440 may operate in response to the fifth signal S5, and thus an inclination (degree of inclination) between the rotation axis of the laminating roll 410 and the rotation axis of the fourth active material transfer roll 204 may be adjusted.

For example, the outer housing mover 460 may operate in response to the fifth signal S5, and thus a distance between the laminating roll 410 and the fourth active material transfer roll 204 may be adjusted.

For example, the outer housing mover 460 may operate in response to the fifth signal S5.

The controller 810 may transmit the sixth signal S6 to the position adjustment roll 500. The sixth signal S6 may include information on the position of the position adjustment roll 500. The position of the position adjustment roll 500 may be fixed or adjusted in response to the sixth signal S6.

The controller 810 may transmit the seventh signal S7 to the heater 700. The seventh signal S7 may include information on at least one of the position or the output of the heater 700.

The heater 700 may operate in response to the seventh signal S7. For example, the position of the heater 700 may be adjusted or fixed in response to the seventh signal S7. For example, the output of the heater 700 may be adjusted in response to the seventh signal S7.

The electrode manufacturing device 10 may include a communication unit 830. The communication unit 830 may communicate with an external organization or an external device. The communication unit 830 may transmit and receive signals with the controller 810.

For example, the communication unit 830 may generate an eighth signal S8 and transmit the eighth signal S8 to the controller 810. In this case, the eighth signal S8 may be included in the input signals S1, S2 and S8.

For example, the controller 810 may generate the eighth signal S8 and transmit the eighth signal S8 to the communication unit 830. In this case, the eighth signal S8 may be included in the output signals S4, S5, S6, S7 and S8.

FIG. 7 is a block diagram of an electrode manufacturing equipment according to an embodiment of the present disclosure.

Referring to FIGS. 1 to 7, the electrode thickness measurement device 20 may generate a third signal S3 and transmit the third signal S3 to the controller 810. The third signal S3 may be included in the input signals S1, S2 and S3. The third signal S3 may include information on at least one of the thickness or the thickness profile of the pre-electrode sheet 50.

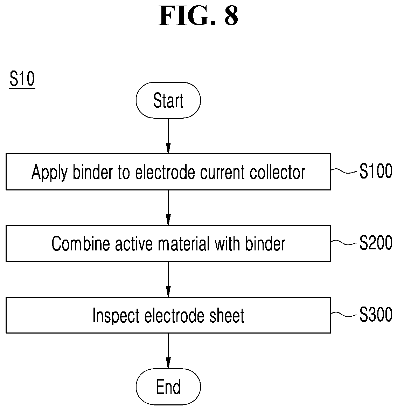

FIG. 8 is a flowchart illustrating an electrode manufacturing method according to an embodiment of the present disclosure.

Referring to FIGS. 1 to 8, an electrode manufacturing method S10 may include a step S100 of applying a binder to the electrode current collector 51. In the step S100, the binder 52 may be applied to the electrode current collector 51. For example, in the step S100, the binder 52 may be applied to at least one of an upper face or a lower face of the electrode current collector 51.

The electrode manufacturing method S10 may include a step S200 of combining the active material 53 with the binder 52. In the step S200, the laminating roll unit 400 and the pressurizing roll 600 may combine the active material 53 with the binder 52 included in the pre-electrode sheet 50.

The electrode manufacturing method S10 may include a step S300 of inspecting the electrode sheet 50. In the step S300, the electrode thickness measurement device 20 may measure at least one of the thickness or the thickness profile of the post-electrode sheet 50.

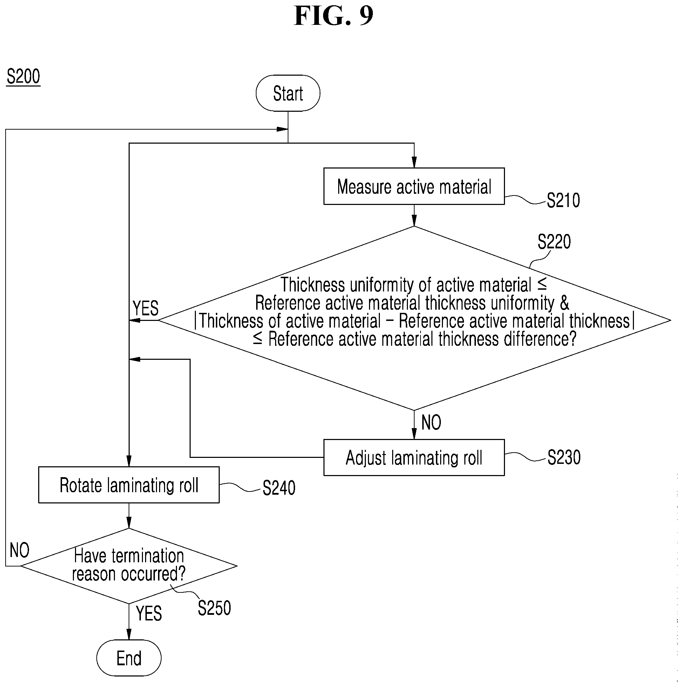

FIG. 9 is a flowchart illustrating an active material combining step illustrated in FIG. 8.

Referring to FIGS. 1 to 9, the active material combining step S200 may include a step S210 of measuring the active material 53. In the step S210, the sensor assembly 300 may measure at least one of a thickness or a thickness profile of the active material 53 in contact with the laminating roll 410.

The active material combining step S200 may include a step S220 of determining whether the thickness of the active material 53 is good. In the step S220, the controller 810 may perform a first active material thickness determination and a second active material thickness determination.

The first active material thickness determination may be to determine whether a uniformity of the thickness of the active material 53 in contact with the laminating roll 410 is less than or equal to a reference active material thickness uniformity.

The uniformity of the thickness of the active material 53 in contact with the laminating roll 410 may indicate how uniform the thicknesses of the active material 53 measured at a plurality of points are.

For example, the uniformity of the thickness of the active material 53 in contact with the laminating roll 410 may be a standard deviation of each thickness of the active material 53 measured at the plurality of points.

The smaller the uniformity of the thickness of the active material 53 in contact with the laminating roll 410, the more uniform the thickness of the active material 53 in contact with the laminating roll 410 may be.

For example, in the step S220, in relation to the first active material thickness determination, the controller 810 may determine whether the uniformity of the thickness of the active material 53 in contact with the laminating roll 410 is less than or equal to the reference active material thickness uniformity.

The second active material thickness determination may be to determine how much the overall thickness of the active material 53 in contact with the laminating roll 410 differs from a reference active material thickness. The overall thickness of the active material 53 in contact with the laminating roll 410 may be an average of respective thicknesses of the active material 53 measured at a plurality of points.

For example, in the step S220, in relation to the second active material thickness determination, the controller 810 may determine whether an absolute value of a value obtained by subtracting the reference active material thickness from the overall thickness of the active material 53 in contact with the laminating roll 410 is less than or equal to a reference active material thickness difference.

The active material combining step S200 may include a laminating roll adjustment step S230.

The controller 810 may perform the step S230 when the uniformity of the thickness of the active material 53 in contact with the laminating roll 410 is greater than the reference active material thickness uniformity.

The controller 810 may perform the step S230 when the absolute value of the value obtained by subtracting the reference active material thickness from the overall thickness of the active material 53 in contact with the laminating roll 410 is greater than or equal to the reference active material thickness difference.

In the step S230, the controller 810 may generate the fifth signal S5 based on the first signal S1 and the second signal S2 and transmit the fifth signal S5 to the laminating roll unit 400. At least one of the inner housing mover 440 or the outer housing mover 460 may adjust at least one of a position or a posture of the laminating roll 410 in response to the fifth signal S5.

The active material combining step S200 may include a laminating roll rotation step S240. In the step S240, the laminating roll 410 may rotate and attach the active material 53 to the binder 52.

The laminating roll rotation step S240 may be performed in parallel with the active material measurement step S210. The laminating roll rotation step S240 may be performed in parallel with the step S220 of determining whether the thickness of the active material 53 is good. The laminating roll rotation step S240 may be performed in parallel with the laminating roll adjustment step S230.

The active material combining step S200 may include a step S250 of determining whether a termination reason has occurred. In the step S250, the controller 810 may determine whether there is a reason for terminating the operation of the electrode manufacturing device 10.

If it is determined that there is a reason for terminating the operation of the electrode manufacturing device 10, the controller 810 may terminate the active material combining step S200. If it is determined that there is no reason for terminating the operation of the electrode manufacturing device 10, the controller 810 may perform the laminating roll rotation step S240 and the active material measurement step S210.

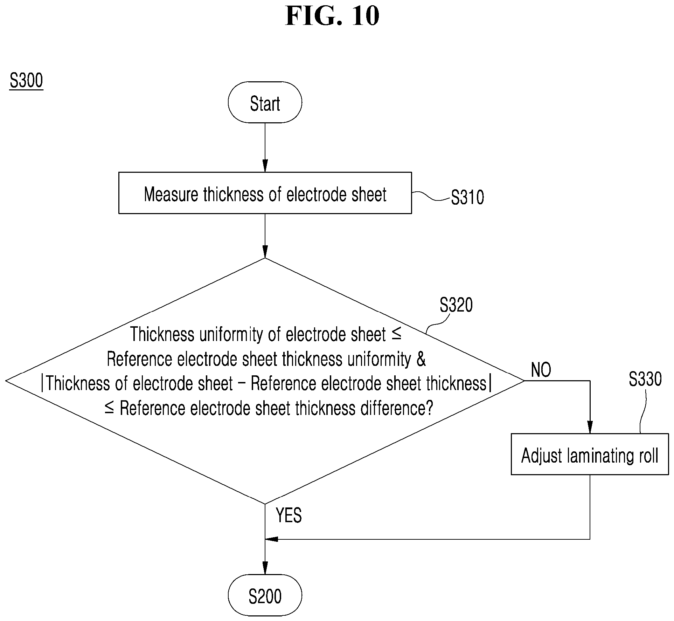

FIG. 10 is a flowchart illustrating an electrode sheet inspection step illustrated in FIG. 8.

Referring to FIGS. 1 to 10, the electrode sheet inspection step S300 may include a step S310 of measuring the thickness of the electrode sheet 50. In the step S310, the electrode thickness measurement device 20 may measure at least one of a thickness or a thickness profile of the post-electrode sheet 50.

The electrode sheet inspection step S300 may include a step S320 of determining whether the thickness of the post-electrode sheet 50 is good. In the step S320, the controller 810 may perform a first electrode sheet thickness determination and a second electrode sheet thickness determination.

The first electrode sheet thickness determination may be to determine whether a uniformity of the thickness of the post-electrode sheet 50 is less than or equal to a reference electrode sheet thickness uniformity.

The uniformity of the thickness of the post-electrode sheet 50 may indicate how uniform the thicknesses of the electrode sheet 50 measured at a plurality of points along a width direction of the post-electrode sheet 50 are.

For example, the uniformity of the thickness of the post-electrode sheet 50 may be a standard deviation of each thickness of the post-electrode sheet 50 measured at the plurality of points. The smaller the uniformity of the thickness of the post-electrode sheet 50, the more uniform the thickness of the post-electrode sheet 50 may be.

For example, in the step S320, in relation to the first electrode sheet thickness determination, the controller 810 may determine whether the uniformity of the thickness of the post-electrode sheet 50 is less than or equal to the reference electrode sheet thickness uniformity.

The second electrode sheet thickness determination may be to determine how much an overall thickness of the post-electrode sheet 50 differs from a reference electrode sheet thickness. The overall thickness of the post-electrode sheet 50 may be an average of respective thicknesses of the post-electrode sheet 50 measured at a plurality of points.

For example, in the step S320, in relation to the second electrode sheet thickness determination, the controller 810 may determine whether an absolute value of a value obtained by subtracting the reference electrode sheet thickness from the overall thickness of the post-electrode sheet 50 is less than or equal to a reference electrode sheet thickness difference.

The electrode sheet inspection step S300 may include a laminating roll adjustment step S330.

The controller 810 may perform the step S330 when the uniformity of the thickness of the post-electrode sheet 50 is greater than the reference electrode sheet thickness. The controller 810 may perform the step S330 when the absolute value of the value obtained by subtracting the reference electrode sheet thickness from the overall thickness of the post-electrode sheet 50 is greater than the reference electrode sheet thickness difference.

In the step S330, the controller 810 may generate the fifth signal S5 based on the first signal S1 and the third signal S3 and transmit the fifth signal S5 to the laminating roll unit 400. At least one of the inner housing mover 440 or the outer housing mover 460 may adjust at least one of the position or the posture of the laminating roll 410 in response to the fifth signal S5.

The controller 810 may perform the active material combining step S200 when the step S330 is completed. The controller 810 may perform the active material combining step S200 when it is determined that the thickness of the post-electrode sheet 50 is good.

The electrode sheet inspection step S300 may be performed after the active material combining step S200. For another example, the electrode sheet inspection step S300 and the active material combining step S200 may be performed in parallel.

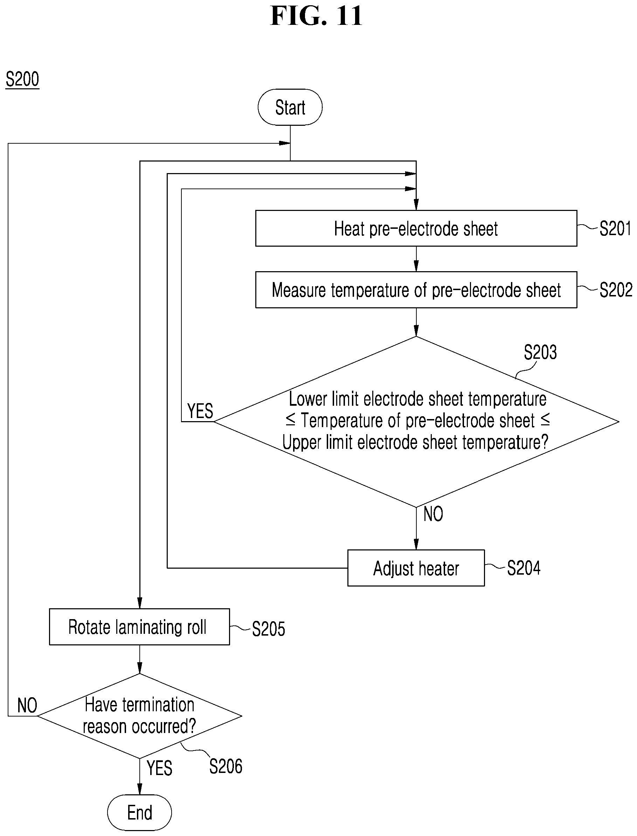

FIG. 11 is a flowchart illustrating an active material combining step including a step of heating a pre-electrode sheet.

In relation to the heating of the pre-electrode sheet 50, the active material combining step S200 may include a plurality of processes (or steps).

The active material combining step S200 may include a step S201 of heating the pre-electrode sheet. In the step S201, the heater 700 and a heating member (not shown) may heat the pre-electrode sheet 50.

The active material combining step S200 may include a step S202 of measuring a temperature of the pre-electrode sheet. In the step S202, the temperature sensor unit 330 may measure the temperature of the pre-electrode sheet 50.

The active material combining step S200 may include a step S203 of determining whether the temperature of the pre-electrode sheet is good. In the step S203, the controller 810 may determine whether the temperature of the pre-electrode sheet 50 is between a lower limit electrode sheet temperature and an upper limit electrode sheet temperature.

When the temperature of the pre-electrode sheet 50 is between the lower limit electrode sheet temperature and the upper limit electrode sheet temperature, the pre-electrode sheet heating step S201 may be performed.

The active material combining step S200 may include a heater adjustment step S204. When it is determined that the temperature of the pre-electrode sheet 50 is not between the lower limit electrode sheet temperature and the upper limit electrode sheet temperature, the step S204 may be performed.

In the step S204, at least one of the position or the output of the heater 700 may be adjusted depending on the temperature of the pre-electrode sheet 50. For example, when the temperature of the pre-electrode sheet 50 is lower than the lower limit electrode sheet temperature, the heater 700 may approach the heating area or the output of the heater 700 may increase. For example, when the temperature of the pre-electrode sheet 50 is higher than the upper limit electrode sheet temperature, the heater 700 may move away from the heating area or the output of the heater 700 may decrease. The step S204 may be terminated, and the pre-electrode sheet heating step S201 may be performed.

The active material combining step S200 may include a laminating roll rotation step S205. In the step S205, the laminating roll 410 may rotate. As the laminating roll 410 rotates, the pre-electrode sheet 50 and the active material 53 may be combined to form the post-electrode sheet 50. The laminating roll rotation step S205 and the pre-electrode sheet heating step S201 may be performed in parallel.

The active material combining step S200 may include a step S206 of determining whether a termination reason has occurred. If it is determined that the termination reason has not occurred, the laminating roll rotation step S205 and the pre-electrode sheet heating step S201 may be performed. If it is determined that the termination reason has occurred, the active material combining step S200 may be terminated.

Only specific examples of implementations of certain embodiments are described. Variations, improvements and enhancements of the disclosed embodiments and other embodiments may be made based on the disclosure of this patent document.

## Claims

1. An electrode manufacturing device (10) comprising:
an electrode sheet supply roll transferring a pre-electrode sheet which forms a face and another face;
a position adjustment roll (500) adjacent to the electrode sheet supply roll, the position adjustment roll (500) receiving the pre-electrode sheet from the electrode sheet supply roll;
a laminating roll (410) and a pressurizing roll (600) which receive the pre-electrode sheet from the position adjustment roll (500) and face each other;
an active material supply roll facing the laminating roll (410) and providing an active material (53) to the laminating roll (410); and
a heater (700) proving heat to a heating area of the pre-electrode sheet, wherein the heating area is positioned between the electrode sheet supply roll and the position adjustment roll (500),
wherein the pre-electrode sheet and the active material (53) are inserted into and discharged from between the laminating roll (410) and the pressurizing roll (600).

2. The electrode manufacturing device (10) of claim 1, wherein the pre-electrode sheet provided to the position adjustment roll (500) includes:
an electrode current collector (51) having a sheet shape and formed of a metal; and
a binder (52) laminated on the electrode current collector (51),
wherein the heater (700) faces the binder (52) and provides heat to the binder (52).

3. The electrode manufacturing device (10) of claim 2, wherein the laminating roll (410) and the pressurizing roll (600) apply a pressure to the electrode current collector (51), the binder (52), and the active material (53) which are inserted into between the laminating roll (410) and the pressurizing roll (600).

4. The electrode manufacturing device (10) of claim 2 or 3, wherein when the active material (53) is inserted into and discharged from between the laminating roll (410) and the pressurizing roll (600), the active material (53) is combined with the binder (52).

5. The electrode manufacturing device (10) of any one of claims 1 to 4, wherein an outer circumferential surface of the pressurizing roll (600) is formed of a silicon.

6. The electrode manufacturing device (10) of any one of claims 1 to 5, further comprising a temperature sensor unit (330) measuring a temperature of the pre-electrode sheet to be provided to the laminating roll (410).

7. The electrode manufacturing device (10) of claim 6, wherein the heater (700) adjusts at least one of a distance or an output of the heater (700) with respect to the heating area based on the temperature of the pre-electrode sheet.

8. The electrode manufacturing device (10) of claim 6 or 7, wherein the temperature sensor unit (330) faces the pre-electrode sheet in contact with the laminating roll (410).

9. The electrode manufacturing device (10) of any one of claims 1 to 8, wherein the laminating roll (410) includes a heating member providing heat to an outer circumferential surface of the laminating roll (410).

10. An electrode manufacturing equipment (1) comprising:
an electrode sheet supply roll transferring a pre-electrode sheet which forms a face and another face;
a position adjustment roll (500) adjacent to the electrode sheet supply roll, the position adjustment roll (500) receiving the pre-electrode sheet from the electrode sheet supply roll;
a laminating roll (410) and a pressurizing roll (600) which receive the pre-electrode sheet from the position adjustment roll (500) and face each other;
an active material supply roll facing the laminating roll (410) and providing an active material (53) to the laminating roll (410);
a heater (700) proving heat to a heating area of the pre-electrode sheet, wherein the heating area is positioned between the electrode sheet supply roll and the position adjustment roll (500); and
an electrode thickness measurement device (20) measuring a thickness of a post-electrode sheet formed by combining the pre-electrode sheet and the active material (53),
wherein the pre-electrode sheet and the active material (53) are inserted into and discharged from between the laminating roll (410) and the pressurizing roll (600) to form the post-electrode sheet.

11. An electrode manufacturing method comprising:
applying a binder (52) to an electrode current collector (51) to form a pre-electrode sheet;
combining an active material (53) with the binder (52); and
inspecting a post-electrode sheet formed by combining the electrode current collector (51), the binder (52), and the active material (53),
wherein combining the active material (53) comprises:
heating the pre-electrode sheet by a heater (700);
measuring a temperature of the pre-electrode sheet;
determining whether the temperature of the pre-electrode sheet is good; and
rotating a laminating roll (410) in contact with the active material (53) to combine the active material (53) with the binder (52).

12. The electrode manufacturing method of claim 11, wherein determining whether the temperature of the pre-electrode sheet is good comprises determining whether the temperature of the pre-electrode sheet is greater than or equal to a lower limit electrode sheet temperature and is less than or equal to an upper limit electrode sheet temperature.

13. The electrode manufacturing method of claim 11 or 12, wherein combining the active material (53) comprises adjusting the heater (700) if the temperature of the pre-electrode sheet is not good.

14. The electrode manufacturing method of claim 13, wherein adjusting the heater (700) comprises, based on the temperature of the pre-electrode sheet, adjusting a distance between the heater (700) and the pre-electrode sheet or adjusting an output of the heater (700).

15. The electrode manufacturing method of any one of claims 11 to 14, wherein heating the pre-electrode sheet and rotating the laminating roll (410) are performed in parallel.
